# EUROPÄISCHE PATENTSCHRIFT

(11) **EP 2 411 252 B1**
(45) Veröffentlichungstag und Bekanntmachung des Hinweises auf die Patenterteilung: **17.04.2013**
(21) Anmeldenummer: 10713561.8
(22) Anmeldetag: 22.03.2010
(51) Int. Cl.: B60S 1/38, B60S 1/52

(54) **WISCHBLATT**
WIPER BLADE
RACLETTE D'ESSUIE-GLACE

(30) Priorität: 25.03.2009 DE 102009014313
(43) Veröffentlichungstag der Anmeldung: 01.02.2012
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Vötsch, Reiner
(86) Internationale Anmeldenummer: PCT/EP2010/001785
(87) Internationale Veröffentlichungsnummer: WO 2010/133269

(56) Entgegenhaltungen:
- DE-A1- 10 007 800
- DE-A1-102006 013 900

## Beschreibung

Die Erfindung bezieht sich auf ein Wischblatt in Form eines Flachwischblatts mit einem Spoiler an der Wischblattoberseite gemäß Oberbegriff Patentanspruch 1.

Flache Wischblätter oder Flachwischblätter, die auch vielfach als Flachbalkenwischblätter bezeichnet werden, sind im Sinne der Erfindung bügel- oder bügelstrukturfreie Wischblätter, die in der dem Fachmann bekannten Weise zumindest aus dem die wenigstens eine Wischlippe bildenden Wischgummi und aus einem Tragelement bestehen, welches im einfachsten Fall von wenigstens einer Federschiene gebildet ist. Beispiele flacher Wischblätter sind z.B. solche mit zwei das Tragelement bildenden Federschienen, die sich jeweils an einer Längsseite des Wischblatts erstrecken und zwischen denen der Wischgummi gehalten ist.

Bekannt ist dabei auch, derartige Flachwischblätter mit wenigstens einem Wischblattspoiler auszubilden. Bei einer Art dieser Flachwischblätter (DE 100 07 800 A1, DE 101 20 467 A1) ist der Wischblattspoiler von wenigstens einem eigenständigen Spoilerprofil gebildet, welches für seine Befestigung die beiden Federschienen, die das eigentliche Wischelement bzw. den Wischgummi zwischen sich aufnehmen, an einander abgewandten außen liegenden Federschienenlängsrändern formschlüssig übergreift. Nachteilig hierbei ist u.a., dass diese Ausbildung zwangsläufig zu einer vergrößerten Gesamtbreite des Wischblatts führt, was u.a. das Wischverhalten negativ beeinflusst und für den Benutzer oder Fahrer eines Fahrzeugs während des Wischbetriebes eine nicht unerhebliche Beeinträchtigung der Sicht deutlich bedingt.

Bekannt sind weiterhin Flachwischblätter, bei denen der Spoiler bzw. das Spoilerprofil einteilig mit dem Wischgummi hergestellt ist (DE 100 00 379 A1, DE 100 33 779 A1). Nachteilig hierbei ist u.a., dass die Herstellung von Wischblättern mit Spoiler und ohne Spoiler unterschiedliche Wischgummiprofile erfordert und auch der Wischgummi, der das eigentliche Verschleißelement eines Wischblatts bildet, nicht einzeln ausgetauscht werden kann.

Ein gattungsgemäßes Wischblatt ist aus dem Dokument DE-A-102006013900 bekannt.

Aufgabe der Erfindung ist es, ein Flachwischblatt aufzuzeigen, welches die oben genannten Nachteile vermeidet und bei reduzierter Wischblattbreite eine von den restlichen Elementen des Wischblatts eigenständiges Austauschen des Wischgummis ermöglicht. Zur Lösung dieser Aufgabe ist ein Flachwischblatt entsprechend dem Patentanspruch 1 ausgebildet.

Die Besonderheit der Erfindung besteht darin, dass das Spoilerprofil an zumindest einem dem Wischgummi zugewandten, d.h. innen liegenden Randbereich der wenigstens einen Federschiene gehalten ist, vorzugsweise dadurch, dass das Spoilerprofil den innen liegenden Randbereich der wenigstens einen Federschiene formschlüssig umgreift.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: in vereinfachter Darstellung und in Seitenansicht ein Flachwischblatt für eine Scheibenwischanlage, zusammen mit einer Teildarstellung eines das Wischblatt tragenden Wischarms;
- Fig. 2: einen Schnitt durch das Flachwischblatt der Figur 1;
- Fig. 3 und 4: Darstellung ähnlich der Figur 2 bei weiteren Ausführungsformen der Erfindung,
- Fig. 5: in schematischer Darstellung verschiedene Ausführungsformen der Federschiene des Wischblattes.

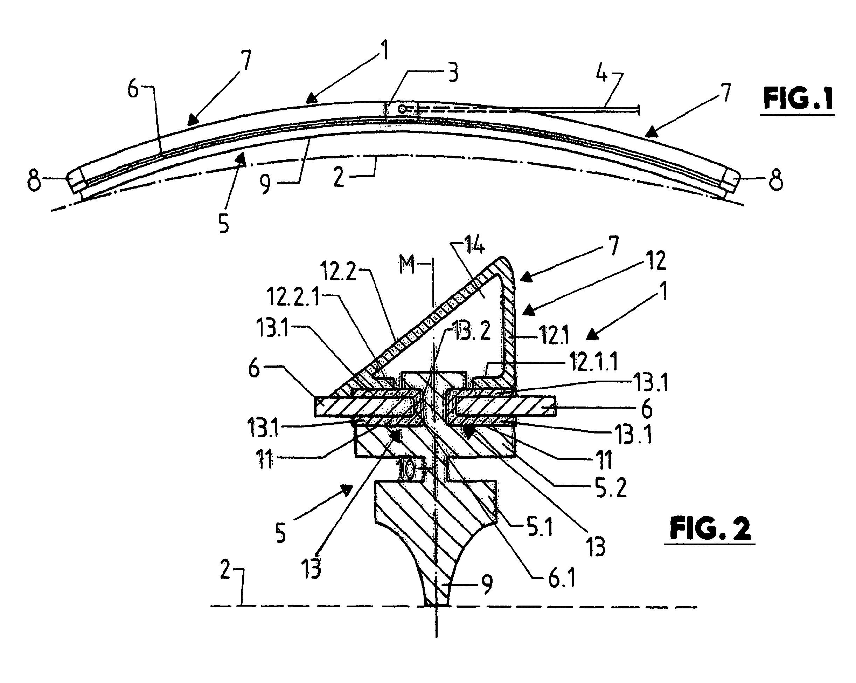

In den Figuren 1 und 2 ist 1 ein Flachwischblatt einer Scheibenwischanlage für Fahrzeugscheiben, beispielsweise für Fahrzeugfrontscheiben 2. Das Flachwischblatt 1, welches in seiner Wischblattmitte über einen Adapter 3 gelenkig mit einem antreibbaren bzw., schwenkbaren Wischarm 4 verbunden ist und in der Figur 1 in einem von der Fahrzeugscheibe 2 leicht angehobenen Zustand dargestellt ist, umfasst u.a. einen sich über die gesamte Länge des Flachwischblatts 1 erstreckenden Wischgummi 5, zwei sich ebenfalls über die gesamte Länge des Flachwischblatts 1 erstreckende Tragelemente in Form von flachen Federschienen 6 und zwei Spoilerprofile 7. Diese bilden die der Fahrzeugscheibe 2 abgewandte Oberseite des Flachwischblatts 1 und erstrecken sich jeweils ausgehend von dem Adapter 3 bis an ein Ende des Flachwischblatts 1. An den beiden Wischblattenden sind End- oder Abschlussstücke 8 befestigt, die die Federschienen 6, das Spoilerprofil 7 sowie teilweise auch den Wischgummi 5 an dem betreffenden Ende abdecken und diese Elemente miteinander verbinden. In der Wischblattmitte sind der Wischgummi 5 und die beiden Federschienen 6 durch den dortigen Adapter 3 zusammengehalten.

Im Detail ist der von einem Profil aus einem gummielastischen Material, beispielsweise aus Gummi oder einem gummielastischen Kunststoff gefertigte und spiegelsymmetrisch zu einer Mittelebene M geformte Wischgummi 5 bei der dargestellten Ausführungsform mit einem Profilabschnitt 5.1, der die zumindest während des Wischbetriebes gegen die Fahrzeugscheibe 2 anliegende Wischlippe 9 aufweist, sowie mit einem Profilabschnitt 5.2 ausgebildet, der über einen Kippsteg 10 an dem Profilabschnitt 5.1 anschließt. Der Profilabschnitt 5.2 ist an den beiden Längsseiten des Wischgummis 5 mit jeweils einer sich über die gesamte Länge des Wischgummis 5 erstreckenden und seitlich offenen Nut 11 versehen, die in der nachstehend noch näher beschriebenen Weise zusammen mit den flachen, aus Federstahl gefertigten und das eigentliche tragende Element des Wischblattes 1 bildenden Federschienen 6 zur formschlüssigen Befestigung der Spoilerprofile 7 dienen. Die Breite, die der Profilabschnitt 5.2 in einer Achsrichtung senkrecht der Mittelebene M aufweist, ist unterhalb der Nuten 11 deutlich größer als oberhalb dieser Nuten.

Das jeweilige Spoilerprofil 7 besteht im Wesentlichen aus einem Profilabschnitt 12 mit zwei Schenkeln 12.1 und 12.2, die die Spoiler-Form bilden, sowie aus zwei U-förmigen Befestigungsprofilen 13 mit jeweils zwei Schenkeln 13.1, die über einen Jochabschnitt 13.2 miteinander verbunden sind. Die beiden Schenkel 12.1 und 12.2, die an der Oberseite des Spoilerprofils 7 ineinander übergehen, sind an ihren unteren, sich in Spoilerprofillängsrichtung erstreckenden Enden jeweils mit dem oberen Schenkel 13.1 eines der Befestigungsprofile 13 verbunden. Mit ihrer geschlossenen Seite, d.h. jeweils mit ihrem Jochabschnitt 13.2 voraus ist jedes U-förmige Befestigungsprofil 13 in eine Nut 11 eingesetzt, sodass es an der betreffenden Längsseite des Flachwischblatts 1 offen ist und die Schenkel 13.1 der Befestigungsprofile 13 senkrecht zur Mittelebene M orientiert sind. Zur Erzielung einer ausreichend festen Verbindung zwischen dem jeweiligen Schenkel 12.1 bzw. 12.2 und dem zugehörigen Befestigungsprofil 13 bzw. dem dortigen Schenkel 13.1 sind die Schenkel 12.1 und 12.2 jeweils mit einer Abwinklung 12.1.1 bzw. 12.2.1 versehen, die über die Innenseite des Schenkels 12.1 bzw.12.2 wegsteht. Durch die reduzierte Breite des Profilabschnitts 5.2 oberhalb der Nuten 11 ist Platz für die Abwinklungen 12.1.1 und 12.2.1 geschaffen.

Der Profilabschnitt 12 ist beispielsweise aus einem weicheren, elastischen Werkstoff, beispielsweise aus einem weichen oder weicheren, elastischen Kunststoff gefertigt. Die Befestigungsprofile 13 bestehen aus einem Werkstoff oder Kunststoff, welcher eine größere Härte als der Kunststoff des Profilabschnitts 12 aufweist, beispielsweise aus PP.

Die Verbindung zwischen den Befestigungsprofilen 13 und den Schenkeln 12.1 bzw. 12.2 ist in einer geeigneten Technik realisiert, beispielsweise durch Kleben, Schweißen und/oder Verknüpfen usw. Bevorzugt ist das Spoilerprofil 7 durch Coextrusion des Profilabschnittes 12 und der Befestigungsprofile 13 hergestellt.

In jedem in eine Nut 11 eingreifenden und seitlich offenen Befestigungsprofil 13 ist eine Federschiene 6 eingesetzt, und zwar derart, dass diese mit ihren Oberflächenseiten senkrecht zur Mittelebene M orientiert ist und jeweils an einem dem Wischgummi 5 oder der Mittelebene M zugewandten bzw. inneren Teilabschnitt oder Randbereich 6.1 von einem Befestigungsprofil 13 umgriffen werden, so dass die Spoilerprofile 7 an diesen Randbereichen 6.1 der Federschienen 6 gehalten und über die in die Nuten 11 eingreifenden Befestigungsprofile 13 zugleich die Verbindung zwischen den Federschienen 6 und dem Wischgummi 5 hergestellt ist. Die Federschienen 6 stehen mit einem Teil ihrer Breite jeweils über die betreffende Längsseite des Wischgummis 5 und des Spoilerprofils 7 vor. Durch die beiden Federschienen, die an den Endstücken 8 sowie auch im Bereich des die Federschienen 6 formschlüssig übergreifenden Adapters 3 miteinander verbunden sind, sind die Befestigungsprofile 13 zugleich auch über ihre gesamte Länge in der jeweiligen Nut 11 gesichert:

Eine Besonderheit des Flachwischblatts 1 besteht u.a. darin, dass die beiden Spoilerprofile 7 und der Wischgummi 5 eigenständige Komponenten sind, dennoch die Spoilerprofile 7 seitlich nicht oder allenfalls nur unwesentlich über die Längsseiten des Wischgummis 5, auf keinen Fall aber über die außen liegenden, einander abgewandten Längsseiten der Federschienen 6 verstehen, sich also für das Flachwischblatt 1 eine besonders schmale Bauweise in der Achsrichtung senkrecht zur Mittelebene M ergibt, und zwar u.a. mit dem Vorteil einer verbesserten Funktion und einer verbesserten Sicht während des Wischbetriebes. Ein weiterer Vorteil des Flachwischblatts 1 besteht auch darin, dass das jeweilige Spoilerprofil 7 nach der Montage einen Hohlraum 14 bildet und sich hierdurch zumindest eine merkliche Reduzierung der Masse und damit auch derjenigen Momente ergibt, die während des Wischbetriebes von dem Wischerantrieb zur Beschleunigung des Wischarmes 4 an den Wendepunkten der hin- und hergehenden Schwenkbewegung des Wischarmes 4 aufgebracht werden müssen.

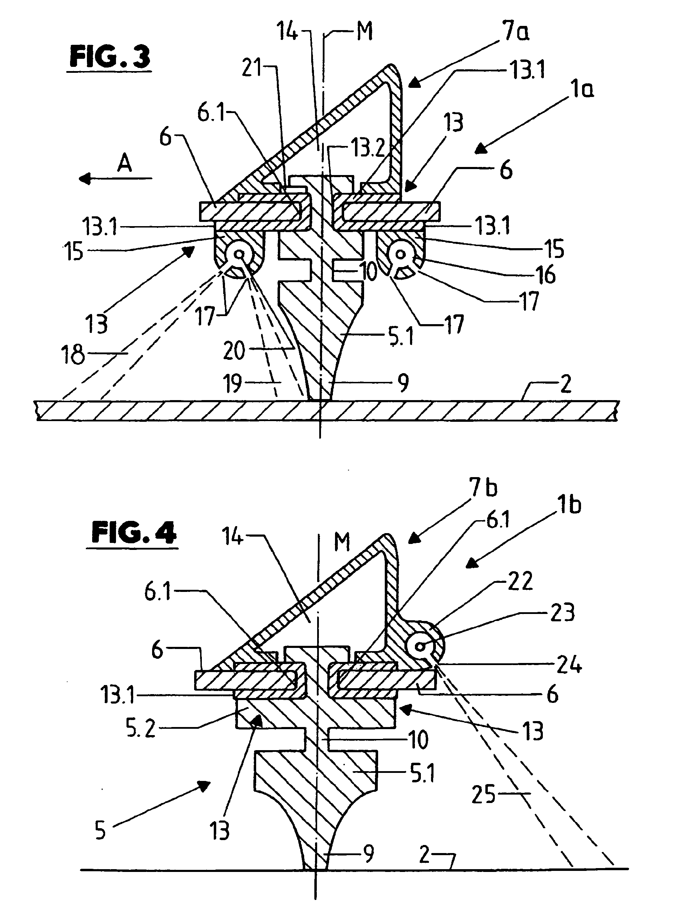

Die Figur 3 zeigt als weitere Ausführungsform ein Flachwischblatt 1 a, welches sich von dem Flachwischblatt 1 im Wesentlichen nur dadurch unterscheidet, dass an den unteren, d.h. der Wischlippe 9 zugewandten Schenkeln 13.1 beider Befestigungsprofile 13 jeweils ein sich über die gesamte Länge des jeweiligen Spoilerprofils 7a erstreckender rohrartiger Abschnitt 15 angeformt ist, der einen Flüssigkeits- oder Waschkanal 16 für eine Reinigungs- oder Waschflüssigkeit (in der Regel Wasser ggs. mit Reinigungs- und/oder Gefrierschutzzusätzen) mit einer Vielzahl von Düsenöffnungen 17 zum Ausbringen der Reinigungs- oder Waschflüssigkeit auf die Fahrzeugscheibe 2 bildet. Die Steuerung einer mit Wischblättern 1 a ausgerüsteten Scheibenwisch- und Waschanlage erfolgt dann bevorzugt so, dass während des Wischbetriebes jeweils derjenige Flüssigkeits- oder Waschkanal 16 mit der unter Druck stehenden Reinigungs- und Waschflüssigkeit beaufschlagt wird, der sich an der bezogen auf die aktuelle Bewegung A des Flachwischblatts 1a vorauseilenden Wischblattlängsseite befindet, sodass über die Düsenöffnungen 17 die Reinigungs- und Waschflüssigkeit der Bewegung A der Wischlippe 9 vorauseilend auf die Fahrzeugscheibe 2 ausgebracht wird, wie dies in der Figur 3 mit den dortigen Flüssigkeitsstrahlen 18 und 19 angedeutet ist.

Um ein Einfrieren des Flachwischblatts 1a bzw. der Flüssigkeits- oder Waschkanäle 16 und der Düsenöffnungen 17 zu vermeiden, kann es zweckmäßig sein, das Flachwischblatt 1a elektrisch beheizbar auszubilden, und zwar unter Verwendung wenigstens eines elektrischen Heizelementes, z.B. in Form eines in den Flüssigkeits- oder Waschkanälen 16 angeordneten Heizdrahtes 20 oder in Form von elektrischen Heizfolien, die am Profilabschnitt 12 innen liegend, beispielsweise am Übergang zu dem jeweiligen Befestigungsprofil 13 oder aber im oder am jeweiligen Befestigungsprofil 13 vorgesehen sind.

Die Figur 4 zeigt als weitere Ausführung ein Flachwischblatt 1 b, welches sich von dem Flachwischblatt 1 der Figuren 1 und 2 im Wesentlichen nur dadurch unterscheidet, dass am Profilabschnitt 12 und dabei am Schenkel 12.1 außen liegend ein sich beispielsweise über die gesamte Länge des Spoilerprofils 7b erstreckender rohrartiger Abschnitt angeformt ist, der wiederum wenigstens einen Flüssigkeits- oder Waschkanal 22 für eine Wasch- und Reinigungsflüssigkeit bildet, und zwar mit einer Vielzahl von entlang dieses Kanals verteilt angeordneten Düsenöffnungen 24. Der Abschnitt 22 und die Düsenöffnungen 24 befinden sich dabei oberhalb der der Wischlippe 9 abgewandten Oberseite der einen Federschiene 6, und zwar derart, dass die während des Wisch- und Waschbetriebes aus den Düsenöffnungen 24 austretenden Strahlen 25 ungehindert durch die Federschiene 6 auf die Fahrzeugscheibe 2 auftreffen.

Bei den Wischblättern 1a und 1 b ist der Profilabschnitt 12 mit den zugehörigen Befestigungsprofilen 13 wiederum in geeigneter Weise verbunden, bevorzugt sind der Profilabschnitt 12 und die Befestigungsprofile 13 einschließlich der Abschnitte 15 und 22 wiederum durch Coextrudieren aus unterschiedlichen Kunststoffen hergestellt, und zwar der Profilabschnitt 12 ggs. mit dem zugehörigen rohrartigen Abschnitt 22 aus einem weicheren Kunststoff und die Befestigungsprofile ggs. mit den rohrförmigen Abschnitten 15 aus einem Kunststoff größerer Härte.

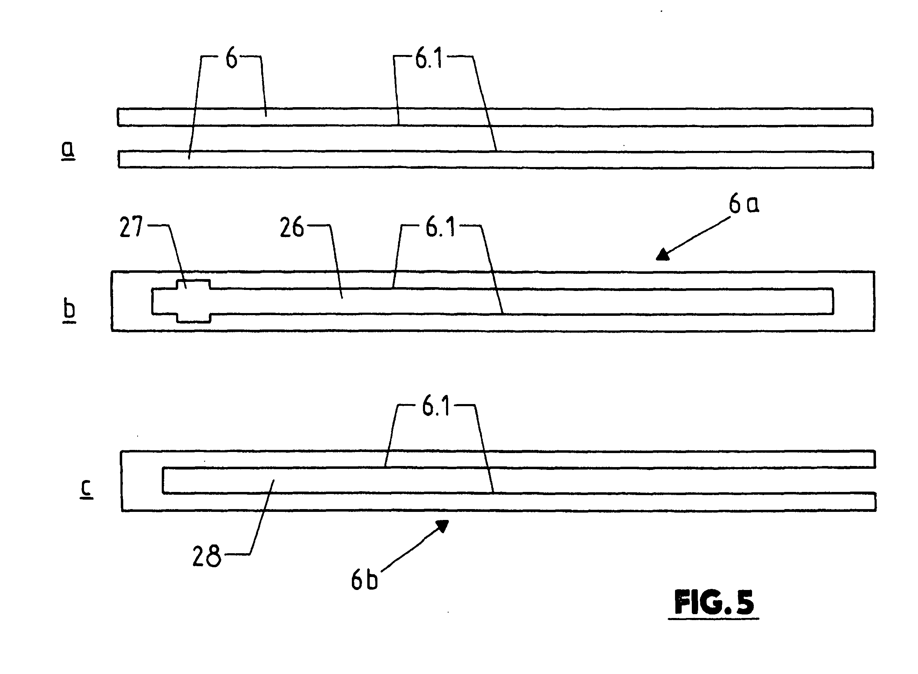

In der Figur 5 sind an den Positionen a - c verschiedene Ausführungen der Federschienen für das Wischblatt 1 dargestellt, und zwar an der Position a zunächst die beiden Federschienen 6, die jeweils einen Randbereich 6.1 bilden.

An der Position b ist eine Federschiene 6a mit einem Längsschlitz 26 dargestellt, der an seinen Längsseiten zwei einander gegenüberliegende Randbereiche 6.1 bildet und in den über eine Erweiterung 27 das Wischblatt 5 mit den an diesem Wischblatt vorläufig gehaltenen Spoilerprofilen 7 derart eingeschoben wird, dass die Spoilerprofile 7 wiederum mit ihren in den Nuten 11 des Wischblattes 5 aufgenommenen Befestigungsabschnitten 13 die beiden Randbereiche 6.1 übergreifen.

An der Position c ist eine Federschiene 6b dargestellt, die einen an einem Ende dieser Federschiene offenen Längsschlitz 28 aufweist und wiederum an jeder Längsseite dieses Schlitzes einen Randbereich 6.1 bildet. Analog zu der Federschiene 6a wird bei dieser Ausführung das Wischblatt mit dem an diesen vorläufig gehaltenen Spoilerprofilen 7 von der offenen Seite in den Längsschlitz 28 derart eingeschoben, dass die Spoilerprofile 7 wiederum mit ihren in den Nuten 11 des Wischblattes aufgenommenen Befestigungsabschnitten 13 die beiden Randbereiche 6.1 übergreifen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1, 1a, 1b: Flachwischblatt
- 2: Fahrzeugscheibe
- 3: Adapter
- 4: Wischarm
- 5: Wischgummi
- 5.1, 5.2: Profilabschnitt des Wischgummis 5
- 6, 6a, 6b: Federschiene
- 6.1: innerer Randbereich der Federschienen
- 7, 7a, 7b: Spoilerprofil
- 8: Abschlusselement
- 9: Wischlippe
- 10: Kippsteg
- 11: Nut
- 12: Profilabschnitt des Spoilerprofils 7
- 12.1, 12.2: Schenkel des Profilabschnitts 12
- 12.1.1, 12.2.1: Abwinklung
- 13: Befestigungsprofil
- 13.1: Schenkel
- 13.2: Jochabschnitt
- 14: Hohlraum
- 15: rohrartiger Abschnitt am Befestigungsprofil 13
- 16: Flüssigkeits- oder Spritzkanal
- 17: Düsenöffnung
- 18, 19: Spritzstrahl
- 20: Heizdraht
- 21: Heizfolie
- 22: rohrartiger Abschnitt
- 23: Flüssigkeits- oder Waschkanal
- 24: Düsenöffnung
- 25: Spritzstrahl
- 26: Längsschlitz
- 27: Erweiterung
- 28: Längsschlitz

- A: Bewegungsrichtung
- M: Wischblattmittelebene

## Patentansprüche

1. Wischblatt für Scheibenwischanlagen von Fahrzeugen in einer Ausbildung als Flachwischblatt, mit wenigstens einer Federschiene (6, 6a, 6b), mit einem an der wenigstens einen Federschiene (6, 6a, 6b) vorgesehenen und eine Wischlippe (9) bildenden Wischgummi (5) sowie mit wenigstens einem mit der wenigstens einen Federschiene (6, 6a, 6b) verbundenen und als eigenständiges Profil gefertigten Spoilerprofil (7, 7a, 7b), **dadurch gekennzeichnet, dass** das Spoilerprofil (7, 7a, 7b) an zumindest einem dem Wischgummi (5) zugewandten oder inneren Randbereich (6.1) der wenigstens einen Federschiene (6, 6a, 6b) gehalten ist.

2. Wischblatt nach Anspruch 1, **dadurch gekennzeichnet, dass** das Spoilerprofil (7, 7, 7b) für seine Befestigung wenigstens zwei Befestigungsabschnitte oder -profile (13) aufweist, die formschlüssig mit einem dem Wischgummi (5) zugewandten oder inneren Randbereich (6.1) der wenigsten einen Federschiene (6, 6a, 6b) verbunden sind.

3. Wischblatt nach Anspruch 1 oder 2, **dadurch gekennzeichnet, dass** die Befestigungsabschnitte oder -profile (13) in Ausnehmungen oder Nuten (11) an Längsseiten des Wischgummis (5) eingreifen.

4. Wischblatt nach einem der vorhergehenden Ansprüche, **dadurch gekennzeichnet, dass** die Befestigungsabschnitte oder -profile (13) jeweils durch die wenigstens eine Federschiene (6, 6a, 6b) am Wischgummi oder in der zugehörigen Ausnehmung oder Nut (11) des Wischgummis (5) gesichert sind.

5. Wischblatt nach einem der vorhergehenden Ansprüche, **dadurch gekennzeichnet, dass** die Befestigungsprofile als U-Profil ausgebildet sind, in denen jeweils eine Federschiene (6, 6a, 6b) zumindest teilweise aufgenommen ist.

6. Wischblatt nach einem der vorhergehenden Ansprüche, **dadurch gekennzeichnet, dass** die Befestigungsabschnitte oder -profile (13) und ein die Spoilerform bildender Profilabschnitt (12) des Spoilerprofils (7, 7a, 7b) aus Werkstoffen, beispielsweise aus Kunststoffen mit unterschiedlichen mechanischen Eigenschaften, beispielsweise mit unterschiedlicher Härte bestehen.

7. Wischblatt nach einem der vorhergehenden Ansprüche, **dadurch gekennzeichnet, dass** der die Spoilerform bildende Profilabschnitt (12) durch Kleben, Schweißen und/oder Verknüpfen mit den Befestigungsabschnitten oder -profilen (13) verbunden ist.

8. Wischblatt nach einem der vorhergehenden Ansprüche, **dadurch gekennzeichnet, dass** das Spoilerprofil (7, 7a, 7b) mit den Befestigungsabschnitten oder -profilen (13) durch Extrudieren, beispielsweise durch Coextrudieren hergestellt ist.

9. Wischblatt nach einem der vorhergehenden Ansprüche, **dadurch gekennzeichnet, dass** am Spoilerprofil (7a, 7b) wenigstens ein sich zumindest über eine Teillänge des Wischblatts (1a, 1 b) oder des Spoilerprofils (7a, 7b) erstreckender Flüssigkeits- oder Waschkanal (16, 23) mit Düsenöffnungen (17, 24) zum Ausbringen einer Wasch- und/oder Reinigungsflüssigkeit auf die Fahrzeugscheibe (2) vorgesehen ist.

10. Wischblatt Anspruch 9, **dadurch gekennzeichnet, dass** der wenigstens eine Flüssigkeits- oder Waschkanal (16) an einem Befestigungsabschnitt oder - profil (13) vorgesehen ist.

11. Wischblatt nach Anspruch 10, **dadurch gekennzeichnet, dass** der wenigstens eine Wasch- oder Flüssigkeitskanal (16) an einem Abschnitt (15) wenigstens eines Befestigungsprofils (13) außerhalb des Wischgummis (5) vorgesehen ist.

12. Wischblatt nach einem der Ansprüche 9 - 11, **dadurch gekennzeichnet, dass** der wenigstens eine Flüssigkeits- oder Waschkanal (23) an dem die Spoilerform bildenden Profilabschnitt (12) vorgesehen ist.

13. Wischblatt nach einem der vorhergehenden Ansprüche, **gekennzeichnet durch** Mittel (20, 21) für ein elektrisches Beheizen des Wischblatts (1a) und/oder des wenigstens einen Wasch- oder Flüssigkeitskanals (16, 23) und der Düsenöffnungen (17, 24) dieses Kanals.

14. Wischblatt nach einem der vorhergehenden Ansprüche, **dadurch gekennzeichnet, dass** der die Spoilerform bildende Profilabschnitt (12) von wenigstens zwei aneinander anschließenden Wandabschnitten oder Schenkeln (12.1, 12.2) gebildet ist, und dass der die Spoilerform bildende Profilabschnitt (12) an sich in Wischblattlängsrichtung erstreckenden Rändern der Schenkel (12.1, 12.2) dem Wischgummi (5) verbunden ist, beispielsweise über die dort vorgesehenen Befestigungsprofile (13).

15. Wischblatt nach einem der vorhergehenden Ansprüche, **dadurch gekennzeichnet, dass** es innerhalb des Spoilers oder des den Spoiler bildenden Profilabschnitts (12) einen Hohlraum (14) aufweist.

## Claims

1. Wiper blade for window wiper systems of vehicles in an embodiment in the form of a flat wiper blade, with at least one spring rail (6, 6a, 6b), with a wiper blade rubber (5) which is provided on the at least one spring rail (6, 6a, 6b) and forms a wiper lip (9), and with at least one spoiler profile (7, 7a, 7b) which is connected to the at least one spring rail (6, 6a, 6b) and is manufactured as an independent profile, **characterized in that** the spoiler profile (7, 7a, 7b) is held at at least one edge region (6.1) of the at least one spring rail (6, 6a, 6b), said edge region facing the wiper blade rubber (5) or being an inner edge region.

2. Wiper blade according to Claim 1, **characterized in that** the spoiler profile (7, 7a, 7b) has, for the fastening thereof, at least two fastening sections or fastening profiles (13) which are connected in a form-fitting manner to an edge region (6.1) of the at least one spring rail (6, 6a, 6b), said edge region facing the wiper blade rubber (5) or being an inner edge region.

3. Wiper blade according to Claim 1 or 2, **characterized in that** the fastening sections or fastening profiles (13) engage in recesses or grooves (11) on longitudinal sides of the wiper blade rubber (5).

4. Wiper blade according to one of the preceding claims, **characterized in that** the fastening sections or fastening profiles (13) are in each case secured on the wiper blade rubber by the at least one spring rail (6, 6a, 6b) or in the associated recess or groove (11) of the wiper blade rubber (5).

5. Wiper blade according to one of the preceding claims, **characterized in that** the fastening profiles are designed as a U profile, in which at least part of one spring rail (6, 6a, 6b) is in each case accommodated.

6. Wiper blade according to one of the preceding claims, **characterized in that** the fastening sections or fastening profiles (13) and a profile section (12) of the spoiler profile (7, 7a, 7b), said profile section forming the spoiler shape, are composed of materials, for example of plastics, having different mechanical properties, for example having a differing hardness.

7. Wiper blade according to one of the preceding claims, **characterized in that** the profile section (12) forming the spoiler shape is connected to the fastening sections or fastening profiles (13) by adhesive bonding, welding and/or linking.

8. Wiper blade according to one of the preceding claims, **characterized in that** the spoiler profile (7, 7a, 7b) is produced together with the fastening sections or fastening profiles (13) by extrusion, for example by co-extrusion.

9. Wiper blade according to one of the preceding claims, **characterized in that** the spoiler profile (7a, 7b) is provided with at least one liquid channel or washing channel (16, 23) which extends at least over a partial length of the wiper blade (1a, 1b) or of the spoiler profile (7a, 7b) and has nozzle openings (17, 24) for discharging a washing liquid and/or cleaning liquid onto the vehicle window (2).

10. Wiper blade according to Claim 9, **characterized in that** the at least one liquid channel or washing channel (16) is provided on a fastening section or fastening profile (13).

11. Wiper blade according to Claim 10, **characterized in that** the at least one washing channel or liquid channel (16) is provided on a section (15) of at least one fastening profile (13) outside the wiper blade rubber (5).

12. Wiper blade according to one of Claims 9-11, **characterized in that** the at least one liquid channel or washing channel (23) is provided on the profile section (12) forming the spoiler shape.

13. Wiper blade according to one of the preceding claims, **characterized by** means (20, 21) for electrically heating the wiper blade (1a) and/or the at least one washing channel or liquid channel (16, 23) and the nozzle openings (17, 24) of said channel.

14. Wiper blade according to one of the preceding claims, **characterized in that** the profile section (12) forming the spoiler shape is formed by at least two adjoining wall sections or limbs (12.1, 12.2), and **in that** the profile section (12) forming the spoiler shape at edges of the limbs (12.1, 12.2), which edges extend in the longitudinal direction of the wiper blade, is connected to the wiper blade rubber (5), for example via the fastening profiles (13) provided there.

15. Wiper blade according to one of the preceding claims, **characterized in that** it has a cavity (14) within the spoiler or the profile section (12) forming the spoiler.

## Revendications

1. Balai d'essuie-glace pour installations d'essuie-glace de véhicules, configuré sous forme de balai d'essuie-glace plat, comprenant au moins un rail élastique (6, 6a, 6b), une raclette d'essuie-glace (5) prévue sur l'au moins un rail élastique (6, 6a, 6b) et formant une lèvre d'essuie-glace (9) ainsi qu'au moins un profilé déflecteur (7, 7a, 7b) connecté à l'au moins un rail élastique (6, 6a, 6b) et fabriqué sous forme de profilé autonome, **caractérisé en ce que** le profilé déflecteur (7, 7a, 7b) est maintenu au niveau d'au moins une région de bord (6.1) interne, ou tournée vers la raclette d'essuie-glace (5), de l'au moins un rail élastique (6, 6a, 6b).

2. Balai d'essuie-glace selon la revendication 1, **caractérisé en ce que** le profilé déflecteur (7, 7a, 7b) présente pour sa fixation au moins deux portions ou profilés de fixation (13) qui sont connectés par engagement par correspondance géométrique à une région de bord (6.1) interne, ou tournée vers la raclette d'essuie-glace (5), de l'au moins un rail élastique (6, 6a, 6b).

3. Balai d'essuie-glace selon la revendication 1 ou 2, **caractérisé en ce que** les portions ou profilés de fixation (13) viennent en prise dans des évidements ou rainures (11) au niveau de côtés longitudinaux de la raclette d'essuie-glace (5).

4. Balai d'essuie-glace selon l'une quelconque des revendications précédentes, **caractérisé en ce que** les portions ou profilés de fixation (13) sont fixés à chaque fois par l'au moins un rail élastique (6, 6a, 6b) sur la raclette d'essuie-glace ou dans l'évidement ou rainure (11) associé(e) de la raclette d'essuie-glace (5).

5. Balai d'essuie-glace selon l'une quelconque des revendications précédentes, **caractérisé en ce que** les profilés de fixation sont réalisés sous forme de profilés en U, dans lesquels à chaque fois au moins un rail élastique (6, 6a, 6b) est reçu au moins en partie.

6. Balai d'essuie-glace selon l'une quelconque des revendications précédentes, **caractérisé en ce que** les portions ou profilés de fixation (13) et une portion profilée (12) formant la forme de déflecteur du profilé déflecteur (7, 7a, 7b) se composent de matériaux, par exemple en plastiques ayant des propriétés mécaniques différentes, par exemple ayant des duretés différentes.

7. Balai d'essuie-glace selon l'une quelconque des revendications précédentes, **caractérisé en ce que** la portion profilée (12) formant la forme de déflecteur est connectée aux portions ou profilés de fixation (13) par collage, soudage et/ou assemblage.

8. Balai d'essuie-glace selon l'une quelconque des revendications précédentes, **caractérisé en ce que** le profilé déflecteur (7, 7a, 7b) est fabriqué avec les portions ou profilés de fixation (13) par extrusion, par exemple par co-extrusion.

9. Balai d'essuie-glace selon l'une quelconque des revendications précédentes, **caractérisé en ce que**, sur le profilé déflecteur (7a, 7b), au moins un canal de liquide ou de lavage (16, 23) s'étendant au moins sur une longueur partielle du balai d'essuie-glace (1a, 1b) ou du profilé déflecteur (7a, 7b) est pourvu d'ouvertures de buse (17, 24) pour éjecter un liquide de lavage et/ou de nettoyage sur le pare-brise (2).

10. Balai d'essuie-glace selon la revendication 9, **caractérisé en ce que** l'au moins un canal de liquide ou de lavage (16) est prévu sur une portion ou un profilé de fixation (13).

11. Balai d'essuie-glace selon la revendication 10, **caractérisé en ce que** l'au moins un canal de lavage ou de liquide (16) est prévu au niveau d'une portion (15) d'au moins un profilé de fixation (13) à l'extérieur de la raclette d'essuie-glace (5).

12. Balai d'essuie-glace selon l'une quelconque des revendications 9 à 11, **caractérisé en ce que** l'au moins un canal de liquide ou de lavage (23) est prévu au niveau de la portion profilée (12) formant la forme de déflecteur.

13. Balai d'essuie-glace selon l'une quelconque des revendications précédentes, **caractérisé par** des moyens (20, 21) pour un chauffage électrique du balai d'essuie-glace (1a) et/ou de l'au moins un canal de lavage ou de liquide (16, 23) et des ouvertures de buse (17, 24) de ce canal.

14. Balai d'essuie-glace selon l'une quelconque des revendications précédentes, **caractérisé en ce que** la portion profilée (12) formant la forme de déflecteur est formée par au moins deux branches ou portions de paroi (12.1, 12.2) se raccordant l'une à l'autre, et **en ce que** la portion profilée (12) formant la forme de déflecteur est connectée à la raclette d'essuie-glace (5) au niveau de bords des branches (12.1, 12.2) s'étendant dans la direction longitudinale du balai d'essuie-glace, par exemple par le biais des profilés de fixation (13) prévus à cet endroit.

15. Balai d'essuie-glace selon l'une quelconque des revendications précédentes, **caractérisé en ce qu'**il présente à l'intérieur du déflecteur ou de la portion profilée (12) formant le déflecteur, une cavité (14).
